# EUROPEAN PATENT APPLICATION

(11) **EP 1 026 047 A2**
(43) Date of publication of application: **09.08.2000**
(21) Application number: 00830055.0
(22) Date of filing: 28.01.2000
(51) Int. Cl.: B60R 19/56

(54) **Bracket supporting lateral protection devices for trucks and trailers**

(30) Priority: 05.02.1999 IT RM990021 U
(71) Applicant: Domar S.r.l., 70022 Altamura (BA) (IT)
(72) Inventor: Lorusso, Pasquale, 70022 Altamura (BA) (IT)
(74) Representative: Iannone, Carlo Luigi

(57) **Abstract**

The invention concerns a bracket supporting lateral protection devices (1) for trucks and trailers comprising an upper fixing base (6) and a lower longitudinal member (7) and fixing means (11, 13) to lock the longitudinal member (7) in a closed or protection position, the fixing means preferably comprising a first peg (11), integrally coupled with the fixing base (6), interacting with hooking elastic means (13), integrally coupled with the longitudinal member (7).

## Description

The present invention relates to a bracket supporting lateral protection devices for trucks and trailers.

More particularly, the invention concerns a bracket of the above kind allowing to temporarily upsetting the lateral protection device in an easy and safe way for the user, e.g. to enter in the lower part of the truck or trailer, guaranteeing a tight and reliable closure of the same device in the protection position.

It is known that trucks and their trailers must at present fulfil particularly severe rules with reference to the lateral protection devices of which they must be provided, in order to efficiently prevent that the not protected road user, such as pedestrians, cyclists and motorcyclists, could accidentally slipping under the sides of the vehicle and be twisted by the same. Particularly, said rules indicate some mechanical and geometrical requisites, relevant to their positioning and to the shock resistance that must be satisfied by the protection devices.

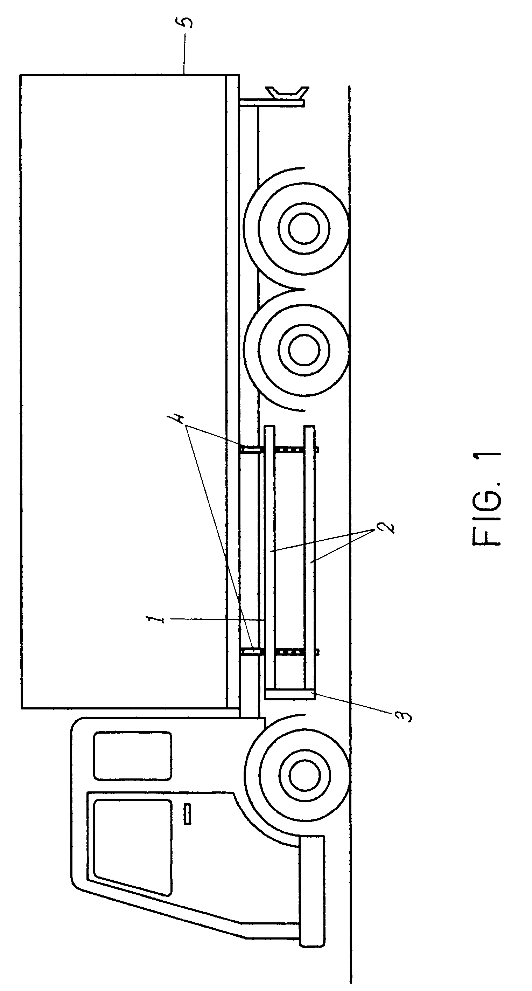

Making reference to figure 1, lateral protection devices 1, having a substantially flat and smooth outer surface, generally comprise longitudinal bars 2, connected by vertical elements 3, integrally coupled with suitable support brackets 4 coupled with the vehicle, either a truck, as in the figure, or a trailer.

Further, lateral protection devices 1 must allow the accessibility to the lower part of the vehicle to ensure the reachability of the components provided in that zone, such as fifth wheel, tool case, electric feeding battery, fuel tank, lamps, reflectors.

To this end, best support brackets 4 available on the market provide an upper fixing base, which is integrally coupled with the lower surface of the vehicle body 5, a lower longitudinal member hinged on the fixing base, and to which longitudinal bars 2 are integrally coupled, and fixing means to tightly locking the longitudinal member to the fixing base in at least two positions; generally, said fixing means comprises peg means that can be inserted within corresponding through holes provided on the fixing base and/or on the longitudinal member and allowing the locking of the longitudinal member in a first protection position, shown in figure 1, and in a second position to enter in the lower part of the body 5, not shown, where the longitudinal members are lifted toward the outside of the vehicle.

This arrangement involves some drawbacks.

In fact, in case it is necessary to enter in the lower part of the vehicle, the operator must carry out many long and difficult operations. Particularly, it is necessary to release the pegs of all brackets 4 coupled with the same longitudinal bars 2, then he has to lift outwardly bars 2 and finally, maintaining lifted the bars 2, he must insert the pegs of each single bar within the holes corresponding to the lifted longitudinal members position. The same operations must be carried out, with a reverse order, when longitudinal members must be again locked in the protection position.

It is well evident to those skilled in the art how many time is necessary to carry out said manoeuvres and their discomfort, for example taking into consideration that the insertion of the pegs into the holes corresponding to the lifted longitudinal members position is particularly disadvantageous being it necessary to reach the fixing base at the same time maintaining the longitudinal members lifted. Furthermore, when subjected to said manoeuvre, the fixing pegs and holes are damaged.

Therefore, the object of the present invention is that of providing a, economical bracket supporting lateral protection devices for truck and trailers, provided with fixing means allowing to temporarily upsetting the lateral protection device in a simple and safe way, guaranteeing a tight and reliable closure of the same device in the protection position.

It is therefore specific object of the present invention a bracket supporting lateral protection devices for trucks and trailers comprising an upper fixing base and a lower longitudinal member and fixing means to lock the longitudinal member in a closed or protection position.

Preferably, according to the invention, the fixing means comprises a peg, integrally coupled with the fixing base, interacting with hooking elastic means, still more preferably comprised of plastic material, integrally coupled with the longitudinal member.

Still according to the invention, the upper fixing base and the lower longitudinal member can be provided with sliding means and the fixing means can allow to block the longitudinal member also in an opened position or lifted position.

Always according to the invention, the longitudinal member can provide two lateral walls and the sliding means can comprise a pin, integrally coupled with the fixing base, interacting with two corresponding slots provided on the lateral walls of the longitudinal member.

Furthermore, according to the invention, the fixing means can also comprise a further peg, integrally coupled with the fixing base, interacting with the upper end of the longitudinal member.

Still according to the invention, the position of the second peg with respect to the fixing base can be adjustable.

Always according to the invention, the support bracket can also comprise means to reveal the position of the fixing base and of the longitudinal member each other.

The present invention will be now described, for illustrative but not limitative purposes, according to its preferred embodiments, with particular reference to the figures of the enclosed drawings, wherein:
figure 1 shows a lateral view of a truck on which a lateral protection device is installed;

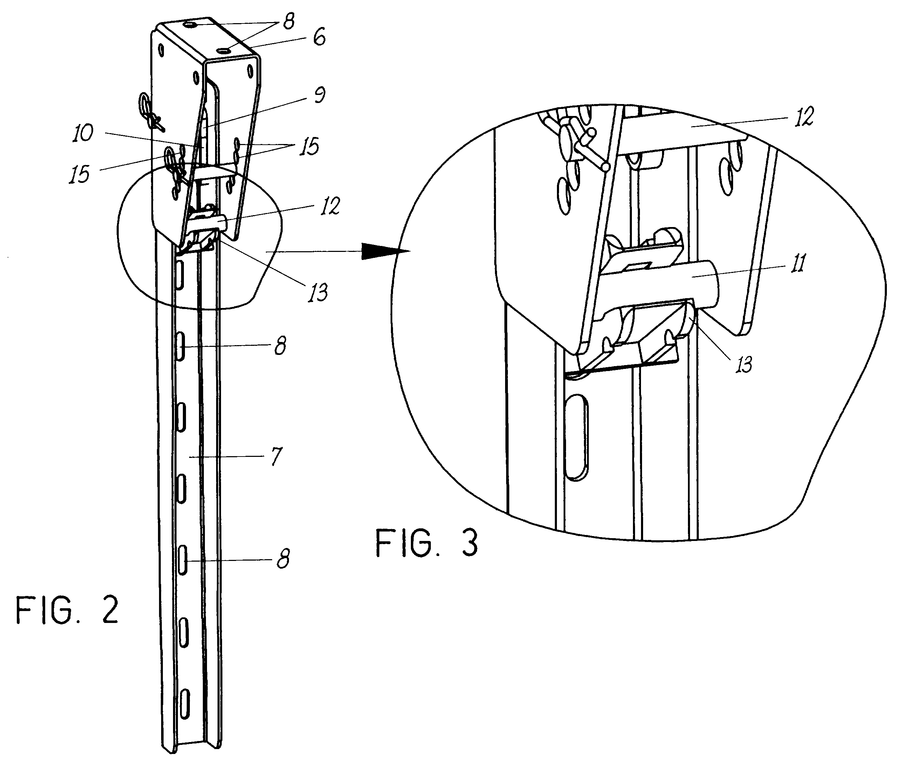

figure 2 shows a perspective view of the support bracket of lateral protection device for truck and trailers according to the invention;
figure 3 shows a perspective view of a particular of the bracket of figure 2;
figure 4a shows a lateral view, including the hidden contours and corners, of the bracket of figure 2 in the closed or protection position;
figure 4b shows a lateral view, including the hidden contours and corners, of the bracket of figure 2 in the opened or lifted position; and
figure 5 shows a lateral view of the bracket of figure 2 installed on a vehicle.

Observing now all the figures of the enclosed drawings, where the same reference numbers will be used to indicate the same elements, the bracket according to the invention comprises an upper fixing base 6 and a lower longitudinal member 7, preferably with a U-shaped profile. Particularly, fixing base 6 and longitudinal member 7 provide through holes 8 to allow the integral coupling with the lower surface of the body 5 of the vehicle (or with a corresponding U-shaped channel coupled with the lower structure of the body 5) and with the longitudinal bars 2 of the lateral protection device, respectively.

The fixing base 6 provides a pin 9 interacting with two corresponding slots 10 of the lateral walls of the longitudinal member 7. Concerning this, longitudinal member 7 can move with respect to the fixing base 6 until the pin 9 can slide within the slots 10.

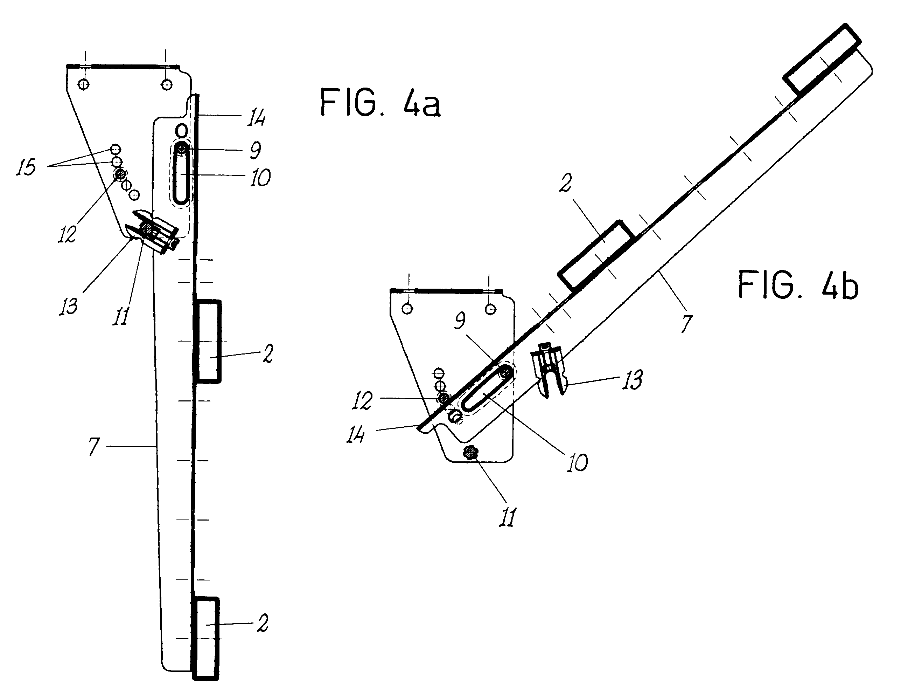

The bracket further comprises fixing means to tightly block the longitudinal member 7 in a first protection position, shown in figure 4a, and in a second position with the lifted longitudinal member, shown in figure 4b. Preferably, said fixing means comprise a first peg 11 and a second peg 12, integrally coupled with the fixing base 6, respectively interacting with hooking elastic means 13, preferably comprised of plastic material, integrally coupled with the longitudinal member 7 and with the upper end 14 of the longitudinal member 7.

As particularly shown in figure 4a, in the closed or protection position, the hooking elastic element 13 is surely coupled with the first peg 11 of the fixing base 6, ensuring the seal of said coupling also in presence of vibrations during the standard use of the vehicle. To release the hooking elastic element 13 of the first peg 11 it is sufficient to pull toward the outer of the protection device, exerting a moderate force, e.g. by longitudinal bars 2.

In the same way, as particularly shown in figure 4b, in the opened or lifted longitudinal member position, the upper end 14 of the longitudinal member 7 is prevented to move upward by the second peg 12 of the fixing base 6. Particularly, to lock the bracket in the opened position starting from the closed position, it is sufficient, once disaccoppiato the elastic element 13 from the first peg11, to rotate the longitudinal member 7 about the pin 9 of the fixing base 6, lifting the same outwardly, to make the slot 10 of the longitudinal member 7 completely sliding on the pin 9 of the base 6, maintaining the longitudinal member 7 inclined in such a way that the upper end 14 is under the peg 12, and finally to release the longitudinal member 7. The positions and the sizes of the slot 10, of the upper end 14 and of the peg 12 are such to ensure the seal of the opened position.

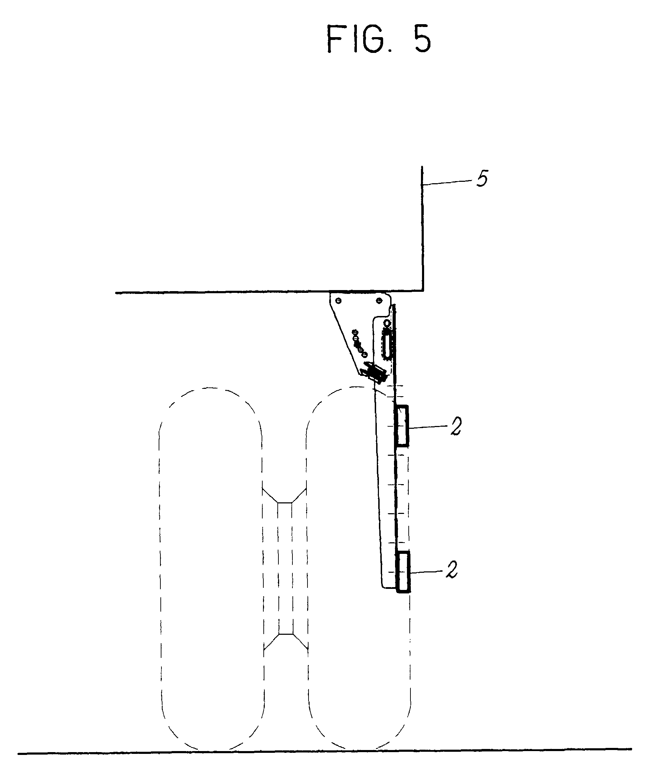

Fixing base 6 provides, in the preferred embodiment of the present invention, two series of corresponding holes 15 to allow the regulation of the height of the second peg 12, making the support bracket adaptable to different kinds of vehicle bodies 5. Particularly, in figure 5 the support bracket is shown in the closed position, applied to the body 5 of a vehicle.

Further embodiments of the present invention can provide that the support bracket also comprises means to reveal the position of the fixing base 6 and of the longitudinal member 7, to indicate to the operator the eventual not desired opening of the bracket.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Bracket supporting lateral protection devices (1) for trucks and trailers comprising an upper fixing base (6) and a lower longitudinal member (7) and fixing means (11, 13) to lock the longitudinal member (7) in a closed or protection position.

2. Support bracket according to claim 1, characterised in that the fixing means comprises a peg (11), integrally coupled with the fixing base (6), interacting with hooking elastic means (13) integrally coupled with the longitudinal member (7).

3. Support bracket according to claim 2, characterised in that said hooking elastic means (13) is comprised of plastic material.

4. Support bracket according to each one of the preceding claims, characterised in that the upper fixing base (6) and the lower longitudinal member (7) are provided with sliding means (9, 10) and the fixing means (11, 12, 13, 14) allow to block the longitudinal member (7) also in an opened position or lifted position.

5. Support bracket according claim 4, characterised in that the longitudinal member (7) provides two lateral walls and the sliding means can comprise a pin (9), integrally coupled with the fixing base (6), interacting with two corresponding slots (10) provided on the lateral walls of the longitudinal member (7).

6. Support bracket according to claim 4 or 5, characterised in that the fixing means comprise a further peg (12), integrally coupled with the fixing base (6), interacting with the upper end (14) of the longitudinal member (7).

7. Support bracket according to claim 6, characterised in that the position of the second peg (12) with respect to the fixing base (6) is adjustable.

8. Support bracket according to each one of the preceding claims, characterised in that the support bracket comprises means to reveal the position of the fixing base (6) and of the longitudinal member (7) each other.

9. Bracket supporting lateral protection devices (1) for trucks and trailers according to each one of the preceding claims, substantially as illustrated and described.
